(19) Europäisches Patentamt / European Patent Office / Office européen des brevets

(11) EP 1 505 131 B1

(12) # FASCICULE DE BREVET EUROPEEN

(45) Date de publication et mention de la délivrance du brevet:
**24.07.2013 Bulletin 2013/30**

(51) Int Cl.:
*C09D 183/06* (2006.01) *C08K 7/00* (2006.01)
*C09D 183/04* (2006.01) *C08J 7/04* (2006.01)

(21) Numéro de dépôt: **04300513.1**

(22) Date de dépôt: **04.08.2004**

(54) **Composition de revêtement anti-rayures comportant des particules anisotropes, substrat revêtu correspondant et son application en optique ophtalmique**

Anisotrope Füllstoffe enthaltende, kratzbeständige Beschichtungszusammensetzung, damit beschichtetes Substrat und seine Anwendung in opthalmischem Gebiet

Abrasion-resistant coating composition containing anisotropic particles, coated surfaces and its application in ophthalmic coatings.

(84) Etats contractants désignés:
**AT BE BG CH CY CZ DE DK EE ES FI FR GB GR HU IE IT LI LU MC NL PL PT RO SE SI SK TR**

(30) Priorité: **05.08.2003 FR 0350397**

(43) Date de publication de la demande:
**09.02.2005 Bulletin 2005/06**

(73) Titulaire: **ESSILOR INTERNATIONAL COMPAGNIE GENERALE D'OPTIQUE**
**94227 Charenton Cédex (FR)**

(72) Inventeurs:
- **Douce, Jérôme**
  **75012 PARIS (FR)**
- **Chaput, Frédéric**
  **91300 MASSY (FR)**
- **Biteau, John**
  **94100 SAINT MAUR DES FOSSES (FR)**
- **Hochstetter, Gilles**
  **27300 BERNAY (FR)**

(74) Mandataire: **Catherine, Alain et al**
**Cabinet HARLE et PHELIP**
**14-16, rue Ballu**
**75009 Paris (FR)**

(56) Documents cités:
**EP-B- 0 379 746** **GB-A- 2 118 201**
**US-A1- 2001 020 059** **US-A1- 2002 022 682**

- **PATENT ABSTRACTS OF JAPAN vol. 0130, no. 21 (C-560), 18 janvier 1989 (1989-01-18) & JP 63 225635 A (TORAY IND INC), 20 septembre 1988 (1988-09-20)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 505 131 B1

## Description

La présente invention se rapporte au domaine des revêtements anti-rayures pour verre de lunettes et plus particulièrement des revêtements anti-rayures chargés en particules minérales.

Il est bien connu, dans le domaine des verres de lunettes, d'utiliser des revêtements anti-abrasion et/ou anti-rayures pour améliorer les propriétés de surface des verres organiques.

La plupart des revêtements de ce type sont constitués d'hydrolysats d'alkoxysilanes et en particulier d'hydrolysats d'époxysilanes.

Des charges colloïdales, telles que de la silice colloïdale ou des oxydes minéraux, comme l'oxyde de titane, de zirconium, d'étain ou d'antimoine, à indice de réfraction élevé, sont largement utilisés dans les revêtements protecteurs pour verres de lunettes. Leur présence permet de renforcer la dureté du réseau constitué par la matrice d'époxysilane.

Il est possible d'incorporer de telles charges à des teneurs élevées dans le revêtement, soit jusqu'à environ 50 à 60% en poids de matière sèche du revêtement.

Bien que les lentilles ophtalmiques revêtues disponibles sur le marché donnent généralement satisfaction, il est souhaitable d'augmenter la dureté et les propriétés de résistance à la rayure de ces revêtements existants.

Ce problème est particulièrement délicat.

En effet, l'augmentation du taux de colloïde, qui permet d'accroître la dureté du revêtement, a pour conséquence de rendre celui-ci plus rigide et cassant, de sorte que le gain obtenu en dureté, ne se traduit pas, à des taux élevés de colloïde, par une résistance à la rayure supérieure pour le système revêtement/substrat, pris dans son ensemble.

Par ailleurs, l'incorporation de quantités très élevées de colloïde (plus de 60% en poids) entraîne également d'autres inconvénients, comme par exemple des problèmes de craquelures dues à une différence de dilatation entre la couche de nature minérale et le substrat, ou d'autres couches, de nature essentiellement organique, déposées préalablement à la surface du verre de lunettes.

Les colloïdes utilisés dans les revêtements commerciaux sont des colloïdes de particules globalement isotropes, c'est-à-dire sensiblement sphériques.

La synthèse de colloïdes anisotropes est connue et leurs applications ont été décrites dans plusieurs brevets ou demandes de brevet.

Le brevet US-5,403,513 décrit la synthèse de colloïdes de $TiO_2$ à particules anisotropes, avec un facteur de forme L/D variant de 1 à 20,6. (L étant la longueur dans l'axe principal le plus long de la particule et D la longueur dans l'axe le plus court de la particule).

Ce document mentionne que le colloïde peut être utilisé comme matériau de revêtement de surface pour des articles transparents en verre minéral ou en plastique.

Aucune formulation spécifique pour le revêtement n'est décrite et c'est le dépôt du simple sol en solution qui est préconisé.

Le brevet US-5,407,600 décrit des nanoparticules dont la longueur représente environ 5 à 10 fois leur épaisseur.

Le brevet mentionne que les sols ont une aptitude à former des films.

Le brevet japonais JP 64941 (n° de publication JP 63-225635) décrit des revêtements résistants en particulier vis à vis de la dégradation à la lumière, utilisables sur des verres de lunettes et verres solaires.

Les revêtements renferment une résine thermodurcissable obtenue à partir d'un organosilane qui peut être le $\gamma$ -glycidoxypropyltriméthoxysilane (Glymo) et des particules non agglomérées de dioxyde de titane dont le facteur de forme L/D varie de 1 à 10, et les particules ont une forme cubique ou parallélépipédique.

Dans l'exemple 1 de ce brevet, les particules ont un rapport L/D de 2.

Comparé à un revêtement avec un colloïde de titane de facteur de forme classique, la résistance aux UV est décrite comme étant considérablement augmentée pour le revêtement avec le colloïde du brevet.

Le revêtement présente également une bonne résistance à l'abrasion.

Le brevet japonais JP 59-78925 décrit un sol d'alumine comprenant une pseudo-boehmite dont le cristal possède une forme en aiguille de diamètre 10 millimicrons ou moins et de longueur 200 millimicrons.

Le sol est introduit dans des films qui sont en fait des films en PVA.

Aucune application optique n'est mentionnée.

La demande de brevet japonais JP 7133463 décrit une composition pour l'obtention d'un film transparent, dur et présentant une bonne adhésion à un substrat comprenant un hydrolysat d'un organoalkoxysilane, un colloïde métallique, entre autres constituants.

La demande de brevet mentionne que les particules du colloïde peuvent être sphériques ou cylindriques.

Le colloïde peut être l'Aluminasol® 100, 200 ou 520.

Il n'est pas fait mention de l'influence éventuelle du facteur de forme des particules.

La demande de brevet publiée EP-1 245 968 décrit un article feuilleté comprenant un film anti-reflets bicouche comprenant une couche extérieure déposée sur une couche interne comprenant des particules d'un oxyde mixte étain/antimoine ayant une forme en aiguille. La couche interne est à base d'uréthane (méth)acrylate.

Il est précisé que la forme en aiguille inclut les formes de fibres, de barreaux, de colonne.

Ces particules présentent un ratio d'aspect de 5 ou plus, préférentiellement de 10 ou plus.

Ces particules sont utilisées à des teneurs élevées (de 40 à 80% en poids) dans la couche extérieure. La demande de brevet EP-1 245 968 précise qu'en dessous de 40% en poids, il n'est pas possible d'obtenir de bonnes propriétés de résistance électrostatique et de résistance à la rayure.

Le document EP1245968 décrit particules en forme d'aiguille ou de barre avec un ratio UD qui est supérieur à 5 et de préférence supérieur à 10. Selon certaines variantes leur longueur L peut descendre jusque 100 nanomètres. Un traitement de surface peut être appliqué. Les particules sont utilisées pour la fabrication de structures laminées à propriétés anti-rayures.

Même si quelques uns de ces documents suggèrent ou préconisent, dans certains cas, l'utilisation de particules anisotropes dans des revêtements résistants à l'abrasion, aucun de ces documents ne suggère d'utiliser des particules de facteur de forme très élevé, c'est-à-dire supérieur à 10, dans un revêtement à base de polysiloxane.

Un des buts de l'invention consiste à fournir des compositions de revêtement polymérisables conduisant à des revêtements présentant une résistance à la rayure améliorée par rapport aux revêtements connus.

Un autre but de l'invention est de fournir des compositions de revêtement polymérisables conduisant à des revêtements présentant une résistance à la rayure améliorée ou équivalente à celles des revêtements anti-rayures de l'art antérieur, à des teneurs plus faibles en charges minérales, que dans les revêtements de l'art antérieur.

Les problèmes techniques ci-dessus sont résolus par une composition polymérisable de revêtement anti-rayure comprenant :

a) au moins un alkoxysilane et/ou au moins un hydrolysat de celui-ci,
b) des particules anisotropes d'au moins un oxyde métallique et/ou d'au moins un oxyhydroxyde métallique, chacune des particules ayant un axe principal et une longueur D1 suivant cet axe principal, inférieure ou égale à 400 nm et dont les dimensions varient, dans une direction transverse audit axe principal, entre une dimension minimum D2 et une dimension maximum D3, avec D3≥ D2, et
c) optionnellement un catalyseur de polymérisation,

les ratios F=D1/D2 et f=D1/D3 définissant les facteurs de forme de chaque particule anisotrope vérifient la relation F> 10 et f≥ 10.

Par axe principal d'une particule anisotrope selon l'invention, on entend l'axe médian de la particule dans la direction de la plus grande longueur de cette particule.

Préférentiellement, les facteurs de forme des particules anisotropes vérifient la relation suivante :

$$10< F\leq 50 \text{ ct } 10< f\leq 50.$$

De préférence, F≥ 15 et mieux encore F≥20.

De manière optimale, F≥25, de préférence F≥30, et mieux encore F≥35.

En ce qui concerne le facteur de forme f, on préfère que celui-ci vérifie la relation f≥ 20, et mieux f≥ 25.

L'invention a également pour objet l'utilisation de particules anisotropes d'oxyde métallique et/ou d'oxyhydroxyde métallique, dont chacune d'entre-elles a un axe principal et une longueur D1 suivant cet axe principal, inférieure ou égale à 400 nm et dont les dimensions varient, dans une direction transverse audit axe principal, entre une dimension minimum D2 et une dimension maximum D3, avec D3≥ D2, caractérisée en ce que les ratios F=D1/D2 et f=D1/D3 définissant les facteurs de forme de chacune desdites particules anisotropes, vérifient la relation F>10 et f≥ 10.

Les particules anisotropes présentant des facteurs de forme élevés confèrent une résistance à la rayure améliorée pour des revêtements de polysiloxane les contenant, par rapport à ces mêmes revêtements contenant des particules isotropes.

Généralement, la longueur D1 des particules anisotropes suivant l'axe principal varie de 100 à 300 nm, préférentiellement de 140 à 300 nm, et mieux encore de 140 à 200 nm.

Il faut noter que l'utilisation de particules de telles dimensions s'éloigne des préconisations habituelles dans le domaine ophtalmique (pour lequel on recommande généralement des dimensions de l'ordre de 50 nm ou moins).

Dans une réalisation préférée de l'invention, F et f sont sensiblement identiques, et les particules anisotropes préférées présentent la forme d'aiguilles.

Dans un mode de réalisation particulièrement préféré, les particules anisotropes présentent la forme de lattes.

Les oxydes et/ou oxyhydroxydes métalliques constituant les particules anisotropes utilisées dans l'invention peuvent être de natures diverses, préférentiellement sous forme de solution colloïdale.

Préférentiellement, les oxydes et/ou oxyhydroxydes métalliques répondent à la formule $M_aO_b(OH)_c$, dans laquelle M désigne un métal, a est un entier variant de 1 à 3, b est un entier variant de 1 à 4 et c est un entier variant de 0 à 4, avec $b+c \geq 1$, préférentiellement $\geq 2$.

A titre d'exemples, on peut citer les oxydes et oxyhydroxydes d'aluminium, de zirconium, de titane, de fer, d'antimoine, d'étain, de tungstène, de vanadium et leurs mélanges.

Les oxydes et les oxyhydroxydes métalliques sont généralement choisis en fonction de leur dureté, mais également en fonction de leur indice de réfraction, de façon à adapter l'indice de réfraction de la composition finale de revêtement les contenant à celle du substrat sur lequel cette composition est destinée à être appliquée.

Le procédé de synthèse des particules anisotropes d'au moins un oxyde et/ou oxyhydroxyde métallique est un procédé de synthèse hydrothermale par hydrolyse d'un précurseur métallique hydrolysable, et traitement hydrothermal.

Préférentiellement, lesdites particules anisotropes sont des particules d' oxyde d'aluminium, ou mieux encore d'oxyhydroxyde d'aluminium AlOOH.

Le procédé de synthèse sera décrit par la suite pour AlOOH.

On utilise préférentiellement, pour la synthèse d'AlOOH, une solution à base d'acylate d'aluminium, en particulier à base d'acétate d'aluminium basique et d'acide nitrique en milieu aqueux.

La concentration initiale en acétate d'aluminium est comprise entre 0,1 $mol.L^{-1}$ et 0,5 $mol.L^{-1}$, préférentiellement entre 0,1 $mol.L^{-1}$ et 0,3 $mol.L^{-1}$.

La concentration en acide nitrique $HNO_3$ est comprise entre 0,5 et 2 mol. $L^{-1}$ et mieux de l'ordre de 0,7 $mol.L^{-1}$.

Le mélange est ensuite placé dans un autoclave à une température comprise entre 150°C et 200°C, préférentiellement entre 170°C et 190°C, pour une durée comprise entre 1h et 24h.

La solution est ensuite purifiée par dialyse. L'aspect du sol varie entre légèrement diffusant à laiteux selon la durée d'hydrolyse. La concentration finale en masse de particules anisotropes dans le sol est préférentiellement comprise entre 0,1% et 4% et mieux encore entre 0,7% et 1,5%.

Les particules obtenues, caractérisés par Microscopie Electronique à Transmission et diffraction des rayons X, sont des particules anisotropes cristallines de boehmite, $\gamma$-AlOOH, dont les facteurs de forme, respectivement F et f sont compris entre F= 40 - f = 40 et F=30 - f=10. La dimension la plus grande D1 est comprise entre 140 nm et 400nm.

Les dimensions et facteurs de forme sont déterminés par comptage sur des observations en microscopie électronique à transmission (MET) de la façon suivante :

On dépose une goutte de colloïde de façon à couvrir une zone de 20 $mm^2$ sur un support adapté à l'observation en MET, on laisse les solvants s'évaporer puis on effectue de trois à cinq clichés représentatifs, à des grossissements variants de 20 000 à 100 000, pris aléatoirement sur la zone précitée.

Les dimensions et facteurs de forme sont alors déterminés par comptage statistique sur un nombre de particules représentatives, compris entre 50 et 100, réparties sur les clichés.

Afin d'accroître leur solubilité dans l'alkoxysilane et/ou l'hydrolysat de celui-ci, on fait préférentiellement subir aux particules anisotropes un traitement de surface.

Celui-ci comprend une étape de greffage d'au moins un alkoxysilane organofonctionnel, préférentiellement un époxysilane et/ou un (méth)acryloxysilane.

Les époxysilanes préférés sont les mêmes que ceux recommandés pour la préparation de la composition de revêtements anti-rayures, telle que décrite par la suite.

Comme alkoxysilane organofonctionnel, on recommande le $\gamma$ -glycidoxypropyl- triméthoxysilane et/ou le (3-méthacryloxy propyl)triméthoxy silane.

Le rapport massique initial de l'alkoxysilane organofonctionnel par rapport à l'oxyde et/ou l'oxyhydroxyde métallique, en particulier la boehmite, est préférentiellement compris entre 0,46 et 2,3, et mieux entre 0,9 et 2,3.

La fonctionnalisation est effectuée dans un solvant organique, préférentiellement alcoolique, par exemple l'éthanol, pendant une durée de 3 à 24 heures, typiquement une durée préférentielle de 12h sous reflux et forte agitation.

De préférence, on n'utilise pas de catalyseur lors de cette étape.

La solution peut être ensuite purifiée par dialyse ou centrifugation.

Après l'étape de greffage, qui crée une écorce autour des nanoparticules, la masse des nanoparticules, mesurée, par exemple, par analyse thermogravimétrique, est généralement augmentée de 10 à 40%, mieux de 10 à 30%.

Les particules anisotropes selon l'invention, notamment sous forme de solution colloïdale, ne forment pas d'aggrégats et sont bien individualisées.

L'étape suivante consiste à préparer une composition sol/gel dans laquelle les particules anisotropes seront incorporées.

Le sol est élaboré à partir d'au moins un alkoxysilane tel qu'un époxysilane, préférentiellement trifonctionnel, et/ou un hydrolysat de celui-ci, obtenu par exemple par hydrolyse avec une solution d'acide chlorhydrique HCl. Après l'étape d'hydrolyse, dont la durée est généralement comprise entre 2h et 24h, préférentiellement entre 2h et 6h, on ajoute, optionnellement des catalyseurs. Un composé tensio-actif est de préférence également ajouté afin de favoriser la qualité optique du dépôt.

Les époxyalkoxysilanes préférés comportent un groupement époxy et trois groupements alkoxy, ces derniers étant directement liés à l'atome de silicium.

Un époxyalkoxysilane préféré peut être un alkoxysilane porteur d'un groupement β-(3,4- époxycyclohexyle), tel que le β -(3,4-époxycyclohexyl)éthyltriméthoxysilane.

Les époxyalkoxysilanes particulièrement préférés répondent à la formule (I) :

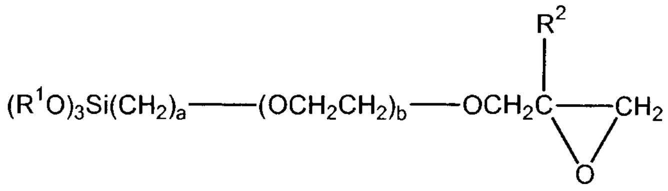

(I)

dans laquelle :

- $R^1$ est un groupement alkyle de 1 à 6 atomes de carbone, préférentiellement un groupement méthyle ou éthyle,
- $R^2$ est un groupement méthyle ou un atome d'hydrogène,
- a est un nombre entier de 1 à 6,
- b représente 0, 1 ou 2.

Des exemples de tels époxysilanes sont le γ -glycidoxypropyltriéthoxysilane ou le γ-glycidoxypropyltriméthoxysilane.

On utilise préférentiellement le γ-glycidoxypropyltriméthoxysilane.

Comme époxysilanes, on peut également utiliser des époxydialkoxysilanes tels que le γ -glycidoxypropylméthyldiméthoxysilane, γ-glycidoxypropylméthyldiéthoxysilane et le γ -glycidoxyéthoxypropylméthyldiméthoxysilane.

Mais les époxydialkoxysilanes sont préférentiellement utilisés à des teneurs plus faibles que les époxytrialkoxysilanes cités précédemment.

D'autres alkoxysilanes préférés répondent à la formule suivante :

$$R^3_c\, R^4_d\, Si\, Z_{4-(c+d)} \qquad (II)$$

formule dans laquelle $R^3$ et $R^4$ sont choisis parmi les groupes alkyle, méthacryloxyalkyle, alcényle et aryle substitués ou non ( des exemples de groupements alkyles substitués sont les alkyles halogénés, notamment chlorés ou fluorés); Z est un groupe alkoxy, alkoxyalkoxy ou acyloxy ; c et d représentent 0, 1 or 2, respectivement; et c+d représente 0, 1 ou 2. Cette formule inclut les composés suivants : (1) tétraalkoxysilanes, tels que le méthylsilicate, éthylsilicate, n-propylsilicate, isopropylsilicate, n-butylsilicate, sec-butylsilicate, and t-butylsilicate, et/ou (2) trialkoxysilanes, trialkoxyalkoxylsilanes ou des triacyloxysilanes, tels que méthyltriméthoxysilane, méthyltriéthoxysilane, vinyltriméthoxysilane, vinyltriéthoxysilane, vinyltriméthoxyéthoxysilane, vinyltriacétoxysilane, phényltriméthoxysilane, phényltriéthoxysilane, γ -chloropropyltriméthoxysilane, γ-trifluoropropyltriméthoxysilane, méthacryloxypropyltriméthoxysilane, et/ou (3) dialkoxysilanes, tels que : diméthyldiméthoxysilane, γ-chloropropylméthyldiméthoxysilane et méthylphényldiméthoxysilane.

Lorsqu'on utilise un hydrolysat d'alkoxysilane(s), celui-ci est préparé de façon connue en soi.

Les techniques exposées dans les brevet EP-614 957 et US-4,211,823 peuvent être utilisées.

L'hydrolysat de silane est préparé en ajoutant de l'eau ou une solution d'acide chlorhydrique ou d'acide sulfurique au(x) silane(s). Il est possible, également, de pratiquer l'hydrolyse sans ajouter de solvants et en utilisant simplement l'alcool ou l'acide carboxylique formé lors de la réaction entre l'eau et le(s) alkoxysilane(s).On peut aussi substituer ces solvants par d'autres solvants, tels que des alcools, des cétones, des chlorures d'alkyles, et des solvants aromatiques.

L'hydrolyse avec une solution aqueuse d'acide chlorhydrique est préférée.

Outre les alkoxysilanes, la solution peut également comprendre d'autres particules d' oxyde ou d'oxyhydroxyde métallique, ou de silice, ne présentant pas les facteurs de forme des particules selon l'invention. Il peut s'agir, en particulier, de particules globalement isotropes.

Des exemples de telles particules sont des particules de silice, ou des particules d'indice de réfraction élevé telles que des particules d'oxyde de titane ou de zirconium.

On ajoute ensuite dans la composition sol/gel préparée précédemment les particules d'oxyde et/ou d'oxyhydroxyde métallique greffées, en particulier de boehmite, stabilisées dans l'éthanol, de façon à obtenir un taux de charge massique souhaité (préférentiellement entre 0,1 % et 39 % en masse par rapport à la masse d'EST (extrait sec théorique) en particules anisotropes selon l'invention dans la composition de revêtement).

La composition sol/gel comprend préférentiellement au moins un catalyseur de durcissement.

Comme exemples de catalyseurs de durcissement, on peut notamment citer les composés de l'aluminium, et en particulier les composés de l'aluminium choisi parmi :

- les chélates d'aluminium, et
- les composés de formules (III) ou (IV) détaillées dessous :

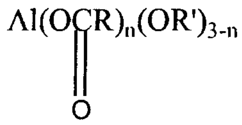 (III)

$$(R'O)_{3-n}Al(OSiR''_3)_n \qquad (IV)$$

dans lesquelles :

R et R' sont des groupements alkyles à chaîne linéaire ou ramifiée de 1 à 10 atomes de carbone,
R" est un groupement alkyle à chaîne linéaire ou ramifiée de 1 à 10 atomes de carbone, un groupement phényle, un groupe

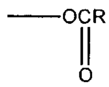

où R a la signification indiquée ci-dessus, et n est un nombre entier de 1 à 3.

Comme on le sait, un chélate d'aluminium est un composé formé en faisant réagir un alcoolate ou un acrylate d'aluminium avec des agents séquestrants exempts d'azote et de soufre, contenant de l'oxygène comme atome de coordination.

Le chélate d'aluminium est de préférence choisi parmi les composés de formule (V) :

$$AlX_vY_{3-v} \qquad (V)$$

dans laquelle :

X est un groupement OL où L est un groupement alkyle de 1 à 10 atomes de carbone,
Y est au moins un coordinat produit à partir d'un composé de formule (1) ou (2) :

$$(1)\ M^1\ CO\ CH_2\ COM^2 \qquad (2)\ M^3\ CO\ CH_2\ COOM^4$$

dans lesquelles

$M^1$, $M^2$, $M^3$ et $M^4$ sont des groupements alkyles de 1 à 10 atomes de carbone,
et v prend les valeurs 0,1 ou 2.

Comme exemples de composés de formule (V), on peut citer l'acétylacétonate d'aluminium, l'éthylacétoacétate bisacétylacétonate d'aluminium, le biséthylacétoacétate acétylacétonate d'aluminium, le di-n-butoxyde monoéthylacétoacétate d'aluminium et le diipropoxyde mono-méthylacétoacétate d'aluminium.

Comme composés de formule (III) ou (IV), on choisit préférentiellement ceux pour lesquels R' est un groupement isopropyle ou éthyle, et R et R" sont des groupements méthyle.

De façon particulièrement avantageuse, on utilisera de préférence comme catalyseur de durcissement de la composition l'acétyle-acétonate d'aluminium, dans une proportion de 0,1 à 5 % en poids du poids total de la composition.

Les compositions selon l'invention peuvent également comprendre un ou plusieurs additifs, tels que des pigments, des absorbeurs UV, des colorants photochromiques, des agents anti-jaunes, des agents antioxydants.

Les compositions de l'invention, peuvent comporter, en outre, un solvant organique dont, préférentiellement, le point d'ébullition, à pression atmosphérique, est compris entre 70 et 140 °C.

Comme solvant organique utilisable selon l'invention, on peut citer les alcools, les esters, les cétones, le tétrahydropyrane, le tétrahydrofurane et leurs mélanges.

Les alcools sont de préférence choisis parmi les alcools inférieurs (en $C_1$-$C_6$), tels que le méthanol, l'éthanol et l'isopropanol.

Les esters sont de préférence choisis parmi les acétates, et on peut citer en particulier l'acétate d'éthyle.

La composition peut également comporter un ou plusieurs tensioactifs, en particulier des tensioactifs fluorés ou fluorosiliconés, généralement à raison de 0,001 à 1 % en masse, de préférence 0,01 à 1 % en masse, par rapport à la masse totale de la composition. Parmi les tensioactifs préférés, on peut citer le FLUORAD® FC430 commercialisé par 3M, le EFKA 3034® commercialisé par EFKA, le BYK-306® commercialisé par BYK et le Baysilone OL31® commercialisé par BORCHERS.

L'extrait sec théorique de la composition de revêtement comprend préférentiellement de 0,1 à 39 % en masse de particules anisotropes selon l'invention, mieux de 3 à 35% en masse, et mieux encore de 10 à 35% en masse.

La masse en extrait sec théorique (EST) est la masse totale calculée de matières solides provenant des différents constituants de la composition de revêtement finale.

Par masse en matières solides provenant des silanes, on entend la masse calculée en unité Qk Si O(4-k)/2 dans lesquelles Q est un groupement organique directement lié à l'atome de silicium par une liaison Si-C et Qk SiO(4-k)/2 provient de Qk Si R'''(4-k) ou Si-R''' engendre SiOH par traitement hydrolytique, et k désigne 0, 1 ou 2.

La masse de matière solide en particules anisotropes d'oxyde et/ou d'oxyhydroxyde métallique dans la composition de revêtement finale est la masse des particules d'oxyde et/ou d'oxyhydroxyde métallique, sans tenir compte de la masse de leur écorce greffée.

Par définition, lorsque les particules anisotropes fonctionnalisées sont intégrées à la matrice polysiloxane du revêtement, l'alkoxysilane organofonctionnel constituant l'écorce des particules est considéré comme faisant partie intégrante de ladite matrice.

L'étape suivante consiste à déposer le vernis composite à base de particules anisotropes.

Tout procédé de dépôt classique peut être utilisé.

On peut citer le dépôt au trempé, technique selon laquelle le substrat à revêtir est plongé dans un bain de la composition, ou le dépôt par centrifugation.

Le sol est déposé préférentiellement par « spin coating », c'est-à-dire par centrifugation, sur des substrats, par exemple un substrat ORMA®, d'Essilor, à base de poly(bisallyl carbonate de diéthylène glycol). La vitesse de dépôt est comprise entre 100 tr/min et 3000 tr/min, préférentiellement entre 200 tr/min et 2000 tr/min.

Les vernis sont ensuite durcis, préférentiellement par traitement thermique en étuve pour une durée de 1 à 5 heures, typiquement de 3 heures à une température comprise entre 80°C et 120°C.

Les films obtenus présentent typiquement une épaisseur de 1 à 10 microns, préférentiellement de 2 à 5 microns.

Les films selon l'invention présentent une excellente résistance à la rayure.

En particulier, les films présentent , sous rayure par une pointe diamant de rayon de pointe 100 micromètres, une charge critique supérieure ou égale à 7 Newtons (N), préférentiellement supérieure ou égale à 9 N et mieux encore supérieure ou égale à 11 N.

Les revêtements selon l'invention peuvent être déposés sur tout substrat approprié, en verre organique ou minéral, par exemple des lentilles ophtalmiques, en particulier des verres de lunettes, ces substrats pouvant être nus ou éventuellement revêtus par un ou plusieurs revêtements, par exemple un revêtement anti-abrasion, éventuellement déposé sur un primaire anti-choc et /ou un primaire d'adhérence.

Parmi les substrats en verre organique convenant pour les articles d'optique selon l'invention, on peut citer les substrats en polycarbonate et ceux obtenus par polymérisation des méthacrylates d'alkyle, en particulier des méthacrylates d'alkyle en $C_1$-$C_4$, tels que le méthyl(méth)acrylate et l'éthyl(méth)acrylate, des (méth)acrylates aromatiques polyéthoxylés tels que les bisphénolates diméthacrylates polyéthoxylés, des dérivés allyliques tels que les allyl carbonates de polyols aliphatiques ou aromatiques, linéaires ou ramifiés, des thio-(méth)acryliques, les substrats en polythiouréthane, en polycarbonate (PC) et en polyépisulfure.

Parmi les substrats recommandés, on peut citer des substrats obtenus par polymérisation des allyl carbonates de polyols parmi lesquels on peut mentionner l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butylènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate).

Les substrats particulièrement recommandés sont les substrats obtenus par polymérisation du bis allyl carbonate du diéthylèneglycol, vendus sous la dénomination commerciale CR 39® par la Société PPG INDUSTRIE (lentille

ORMA® ESSILOR).

Parmi les substrats également recommandés, on peut citer les substrats obtenus par polymérisation des monomères thio(méth)acryliques, tels que ceux décrits dans la demande de brevet français FR-A-2 734 827.

Bien évidemment, les substrats peuvent être obtenus par polymérisation de mélanges des monomères ci-dessus.

Avant le dépôt, il est possible d'activer la surface du substrat par un traitement approprié, tel qu'un traitement plasma ou corona, ou un traitement par une solution aqueuse acide ou basique, de façon à créer des sites réactifs qui permettront une meilleure adhérence avec la composition de revêtement anti-rayures.

On peut utiliser comme couche de primaire anti-choc toutes couches de primaire anti-choc classiquement utilisées pour les articles en matériau polymère transparent, tels que des lentilles ophtalmiques.

Parmi les compositions de primaire préférées, on peut citer les compositions à base de polyuréthanne thermoplastiques, telles que celles décrites dans les brevets japonais 63-141001 et 63-87223, les compositions de primaires poly(méth)acryliques, telles que celles décrites dans le brevet US-5,015,523, les compositions à base de polyuréthannes thermodurcissables, telles que celles décrites dans le brevet EP-0 404 111 et les compositions à base de latex poly (méth)acryliques et latex de polyuréthanne, telles que celles décrites dans les documents de brevets US-5,316,791, EP-0 680 492.

Les compositions de primaires préférées sont les compositions à base de polyuréthanne et les compositions à base de latex, en particulier les latex de polyuréthanne.

Les latex poly(méth)acryliques sont des latex de copolymères constitués principalement par un (méth)acrylate, tel que par exemple le (méth)acrylate d'éthyle ou de butyle, ou de méthoxy ou éthoxyéthyle, avec une proportion généralement mineure d'au moins un autre comonomère, tel que par exemple du styrène.

Les latex poly(méth)acryliques préférés sont les latex de copolymères acrylate-styrène.

De tels latex de copolymères acrylate-styrène sont disponibles commercialement auprès de la Société ZENECA RESINS sous la dénomination NEOCRYL®.

Les latex de polyuréthanne sont également connus et disponibles dans le commerce.

A titre d'exemple, on peut citer les latex de polyuréthanne contenant des motifs polyesters. De tels latex sont également commercialisés par la Société ZENECA RESINS sous la dénomination NEOREZ® et par la Société BAXENDEN CHEMICAL sous la dénomination WITCOBOND®.

On peut également utiliser dans les compositions de primaire des mélanges de ces latex, en particulier de latex polyuréthanne et de latex poly(méth)acrylique.

Ces compositions de primaire peuvent être déposées sur les faces de l'article d'optique par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 $\mu$m, de préférence 0,5 à 1,5 $\mu$m.

La suite de la description se réfère aux figures annexées, qui représentent respectivement :

**Figure 1** :
des particules anisotropes de boehmite, avant fonctionnalisation, présentant des facteurs de forme F=30 et f=10 (particules anisotropes sous forme de lattes).

**Figure 2** :
des particules anisotropes de boehmite, avant fonctionnalisation, présentant des facteurs de forme F=25 et f=25 (particules anisotropes sous forme d'aiguilles).

**Figure 3** :
un graphe de la charge critique maximale selon les revêtements des exemples comparatifs 1, 2 et des exemples 1 et 2 de l'invention.

Les exemples qui suivent illustrent l'invention, de façon non limitative.

EXEMPLES :

<u>Exemple 1</u> : élaboration de films de $\gamma$-glycidoxypropyltriméthoxysilane (Glymo) chargés avec des particules de boehmite de facteurs de forme F = 25, f =25 greffées Glymo.

1.1. Synthèse des particules anisotropes :

On mélange 13,5 g d'acétate d'aluminium basique ($(CH_3CO_2)_2AlOH$, Aldrich, CAS 142-03-0) avec 300 mL d'eau distillée et 1,89 mL d'acide nitrique ($HNO_3$ 70%, SdS, CAS 7697.37.2). On laisse sous agitation 10 min, puis le tout est placé dans un autoclave pour le traitement hydrothermal. La durée du traitement est de 3 heures.

La solution ainsi obtenue est dialysée 48h dans de l'eau déminéralisée.

Les particules obtenues sont des particules de boehmite présentant les facteurs de forme F=25, f=25 pour une longueur moyenne de 180 nm.

Ces particules sont représentées figure 2.

1.2. Fonctionnalisation des particules anisotropes :

Ces particules sont transférées dans l'éthanol par des opérations de centrifugation-redispersion successives (3 fois 4000 tours/minute pendant 30 minutes).

5,4 g de boehmite sont redispersées dans 500 mL d'éthanol. On rajoute ensuite 5g de γ-glycidoxypropyltriméthoxysilane (ALDRICH). La solution est ensuite laissée à reflux sous agitation pendant 12h.

La solution ainsi obtenue est purifiée par dialyse dans l'éthanol puis concentrée pour atteindre un extrait sec de 4% en masse. La solution est ensuite ramenée à un extrait sec de 3,5% en masse par ajout de HMP (4-hydroxy, 4-methyl penta-2-one).

L'extrait sec, dont la composition est déterminée par analyse thermogravimétrique, comprend 83% en masse d'oxyhydroxyde d'aluminium pour 17% en masse de glymo greffé.

1.3. Elaboration du sol/gel et incorporation des particules anisotropes :

11,25 g d'HCl 0,1 M sont ajouté goutte à goutte sous agitation à 50 mL de glycidoxypropyltriméthoxysilane. La température du mélange ne dépasse pas 40°C. La solution est alors laissée 2 heures sous agitation.

On ajoute alors 2g d'acétyl acétonate d'aluminium ($Al(Acac)_3$) et 2 mL de surfactant EFKA 3034 à 5% massique dans le méthanol. On obtient ainsi un hydrolysat prêt à l'addition des particules anisotropes.

On ajoute ensuite 21 g de la solution de boehmite à 2g de l'hydrolysat précédemment décrit de façon à obtenir une composition de revêtement finale comprenant 33% en masse de particules anisotropes par rapport à la masse de l'EST de cette composition.

Les solutions obtenues sont ultrasonifiées afin d'optimiser la dispersion des colloïdes.

Les substrat pour le dépôt sont des verres ORMA® (polymère à base de diéthylène glycol ) qui ont été soumis au traitement suivant : soude 15% pendant 3 min., eau de ville 3 min., eau déionisée 3 min, et alcool isopropylique 3 min.

Les dépôts de la composition de revêtement finale sont ensuite effectués par spin coating à 1200 tr/mins.

Les films sont cuits 3 heures à 120°C. L'épaisseur obtenue est 3,7 μm.

Exemple 2 : élaboration de films Glymo chargés avec des particules de boehmite de facteur de forme F=30, f=10 greffées Glymo.

2.1. Synthèse des particules anisotropes.

On mélange 13,5 g d'acétate d'aluminium basique ($(CH_3CO_2)_2AlOH$, Aldrich, CAS 142-03-0) avec 300 mL d'eau distillée et 1,89 mL d'acide nitrique ($HNO_3$ 70%, SdS, CAS 7697.37.2). On laisse sous agitation 10 min, puis le tout est placé dans un autoclave pour le traitement hydrothermal. La durée du traitement est de 24 heures.

La solution ainsi obtenue est dialysée 48h dans de l'eau déminéralisée.

Les particules obtenues présentent un facteur de forme F=30, f=10 pour une longueur moyenne de 180 nm.

Ces particules sont représentées figure 1.

2.2. Fonctionnalisation des particules anisotropes.

Ces particules sont transférées dans l'éthanol par des opérations de centrifugation-redispersion successives.

5,4 g de boehmite sont redispersées dans 500 mL d'éthanol. On rajoute ensuite 12,5g de glycidoxypropyltriméthoxysilane (ALDRICH). La solution est ensuite laissée à reflux sous agitation pendant 12h.

La solution ainsi obtenue est purifiée par dialyse dans l'éthanol puis concentrée pour atteindre un extrait sec de 7% en masse.

L'extrait sec, dont la composition est déterminée par analyse thermogravimétrique, comprend 60% en masse d'oxyhydroxyde d'aluminium pour 40% en masse de Glymo greffé.

2.3. Elaboration du sol /gel et incorporation des particules anisotropes.

11,25 g d'HCl 0,1 M sont ajouté goutte à goutte sous agitation à 50 mL de glycidoxypropyltriméthoxysilane. La température du mélange ne dépasse pas 40°C. La solution est alors laissée 2 heures sous agitation.

On ajoute alors 2g d'acétyl acétonate d'aluminium ($Al(Acac)_3$) et 2 mL de surfactant EFKA 3034 à 5% massique dans le méthanol. On obtient ainsi un hydrolysat prêt à l'addition des nanoparticules.
On ajoute ensuite 20,8 g de la solution de boehmite à 2g de l'hydrolysat précédemment décrit de façon à obtenir une composition de revêtement finale comprenant 33% en masse de particules anisotropes par rapport à la masse de l'EST de cette composition.
Les solutions obtenues sont ultrasonifiées afin d'optimiser la dispersion des colloïdes.
Les verres ORMA® servant de substrat pour le dépôt subissent le traitement suivant : soude 15% pendant 3 min., eau de ville 3 min., eau deionisée 3 min, et alcool isopropylique 3 min.
Les dépôts de la composition de revêtement finale sont ensuite effectués par spin coating à 1200 tr/mins.
Les films sont cuits 3 heures à 120°C. L'épaisseur obtenue est 3.7 $\mu$m.

<u>Exemple 3 :</u> élaboration de films méthyltriéthoxysilane (MTEOS) chargés avec des particules de boehmite de facteur de forme F=25, f=25 greffées avec du (3-méthacryloxypropyl)triméthoxysilane.

3.1. Synthèse des particules anisotropes.

On mélange 13,5 g d'acétate d'aluminium basique ($(CH_3CO_2)_2AlOH$, Aldrich, CAS 142-03-0) avec 300 mL d'eau distillée et 1,89 mL d'acide nitrique ($HNO_3$ 70%, SdS, CAS 7697.37.2) . On laisse sous agitation 10 min, puis le tout est placé dans un autoclave pour le traitement hydrothermal. La durée du traitement est de 3 heures.
La solution ainsi obtenue est dialysée 48h dans de l'eau déminéralisée.
Les particules obtenues présentent un facteur de forme F= 25, f= 25 pour une longueur moyenne de 180 nm.
3.2. Fonctionnalisation des particules de boehmite de facteur de forme F=25, f=25 avec du (3-méthacryloxypropyl)triméthoxysilane.
Les particules de boehmite synthétisées précédemment sont transférées dans l'éthanol par des opérations de centrifugation-redispersion successives.
1 gramme de Boehmite est redispersé dans 160 ml d'éthanol. On rajoute ensuite 2,7 g de (3-méthacryloxypropyl) triméthoxysilane (ALDRICH). La solution est ensuite laissée à reflux sous agitation pendant 12h.
La solution ainsi obtenue est purifiée par dialyse dans l'éthanol puis concentrée pour atteindre un extrait sec de 6 % en masse. L'extrait sec, dont la composition est déterminée par analyse thermogravimétrique, comprend 60% en masse d'oxyhydroxyde d'aluminium pour 40% en masse de (3-méthacryloxypropyl)triméthoxysilane greffé.

3.3. Elaboration de film à base de méthyltriéthoxysilane (MTEOS) chargés avec des particules de boehmite de facteur de forme F=25, f=25 greffée (3-méthacryloxypropyl)triméthoxysilane.

216 mL d'eau sont ajustés à pH 3,8 par ajout d'HCl concentré. On ajoute ensuite 120 mL de MTEOS et on laisse sous agitation une nuit. La solution est concentrée par élimination d'une partie de l'eau et de l'éthanol formé. On laisse ensuite décanter durant 72 heures. Le surnageant est alors prélevé et le sol redissout dans de l'étheroxyde. On laisse décanter et l'éther est évaporé. On rince ensuite le sol 2 fois au tétrahydrofuranne. On obtient alors 120 mL de solution de MTEOS hydrolysé dans le THF. La concentration massique du sol est de 591,5 $g.L^{-1}$.
On ajoute ensuite 6,5 g de solution de boehmite à 1,18 g de l'hydrolysat précédemment décrit de façon à obtenir une composition de revêtement finale comportant des particules anisotropes de boehmite dont la masse représente 20% de la masse de l'EST de cette composition.
Les solutions obtenues sont traitées aux ultrasons afin d'optimiser la dispersion des colloïdes.
Les verres ORMA® servant de substrat pour le dépôt subissent le traitement suivant : soude 15% pendant 3 min., eau de ville 3 min., eau deionisée 3 min, et alcool isopropylique 3 min.
Les dépôts sont ensuite effectués par spin coating à 1500 tr/mins.
Les films sont cuits 3 heures à 120°C. L'épaisseur obtenue est 2,8 $\mu$m.
Les exemples comparatifs qui suivent ont été mis en oeuvre en utilisant un colloïde commercial Aluminasol® - 200, commercialisé par la société Nissan.

<u>Exemple comparatif 1</u> :

Elaboration de film chargé avec des particules Aluminasol®-200 non greffées.
11,25 g d'HCl 0,1 M sont ajoutés goutte à goutte sous agitation à 50 ml de glycidoxypropyltriméthoxysilane. La température du mélange ne dépasse pas 40°C. La solution est alors laissée deux heures sous agitation.
On ajoute alors 2 g. d'acétylacétonate d'aluminium ($Al(Acac)_3$) et 2 ml de surfactant EFKA 3034 à 5% massique dans le méthanol. On obtient ainsi un hydrolysat A prêt à l'addition de l'Aluminasol®.
La solution colloïdale d' Aluminasol®-200 est diluée dans de l'éthanol de façon à obtenir un extrait sec de 8%

en masse.

6,5 g. de cette solution sont ajoutés à 2 g. de l'hydrolysat A décrit précédemment de façon à obtenir une composition de revêtement finale présentant un taux de 33% en masse de particules d'Aluminasol® dans l'EST de cette composition de revêtement.

Les solutions obtenues sont traitées aux ultrasons afin d'optimiser la dispersion des colloïdes.

Les verres ORMA® servant de substrats pour le dépôt subissent le traitement suivant : soude 15% pendant 3 minutes, eau de ville 3 minutes, eau dé-ionisée pendant 3 minutes et alcool isopropylique 3 minutes.

Les dépôts de la composition de revêtement finale sont ensuite effectués par spin coating à 330 tours/minute.

Les films sont cuits 3 heures à 120 °C. L'épaisseur obtenue est de 3,7 micromètres.

Exemple comparatif 2:

Elaboration de films chargés avec des particules Aluminasol®-200 greffées.

8g d'Aluminasol ®-200 sont dispersées dans 500 ml. d'éthanol.

On rajoute ensuite 7,4g. de glycidoxypropyltriméthoxysilane (Aldrich). La solution est ensuite laissée à reflux sous agitation pendant 12 heures.

La solution ainsi obtenue est purifiée par dialyse dans de l'éthanol puis concentrée pour atteindre un extrait sec de 13% en masse. La solution est ensuite ramenée à un extrait sec de 3,5% en masse par ajout de HMP(4-hydroxy, 4-méthyl penta-2-one).

L'extrait sec, dont la composition est déterminée par analyse thermogravimétrique, comprend 84% en masse de particules pour 16% en masse de glymo greffé.

5,5 g. de cette solution sont ajoutés à 2g. de l'hydrolysat A de glymo tel que décrit dans l'exemple comparatif 1, de façon à obtenir une composition de revêtement finale comprenant des particules d'Aluminasol® -200 représentant 30% en masse de l'EST de cette composition.

Les solutions obtenues sont traitées aux ultrasons afin d'optimiser la dispersion des colloïdes.

Les verres ORMA® servant de substrats pour le dépôt subissent le traitement suivant : soude 15% pendant 3 minutes, eau de ville 3 minutes, eau dé-ionisée pendant 3 minutes et alcool isopropylique 3 minutes.

Les dépôts de la composition de revêtement finale sont ensuite effectués par spin coating à 1000 tours/minute.

Les films sont cuits 3 heures à 120 °C. L'épaisseur obtenue est de 4 micromètres

Caractérisation mécanique des films

On a comparé les propriétés mécaniques vis-à-vis de la rayure des films chargés avec les particules de boehmite à facteur de forme élevé selon l'invention et celle des films chargés avec des particules commerciales d'ALUMINASOL®-200 non greffées et greffées (exemples comparatifs 1 et 2)

Les rayures sont obtenues avec des pointes diamants coniques terminées d'une portion sphérique sur laquelle on applique une charge augmentant progressivement sur la longueur de la rayure. Les caractéristiques de l'appareil utilisé pour le rayage sont données ci-dessous.

Appareil utilisé : SCRATCH TEST (MST SCEMEX®)

Les spécifications du CSEM SCRATCH TEST (MST SCEMEX®) sont les suivantes :

Le système de charge est basé sur une bobine électromagnétique et un système de bras sur ressorts.
La gamme de charges : 10 mN-30N.
L'instrument est équipé d'un détecteur d'émission acoustique et d'un système de mesure de la force tangentielle.

**Paramètres utilisés :**

Rayon de l'indenteur : 100$\mu$m
Charge croissante et vitesse de chargement constante au cours du rayage.
Charge : 0,1-15N.
Vitesse de charge : 89 N/min
Longueur de la rayure : 10 mm

Au delà d'une certaine charge, des fissures régulières commencent à apparaître au niveau de la rayure. Cette

charge est définie comme la charge critique d'endommagement, appelée par la suite charge critique.

Au-delà de cette charge critique, la rayure devient très nettement visible à l'oeil nu, à cause de l'effet optique des fissures. Le substrat revêtu est alors endommagé depuis la surface du revêtement jusqu'au coeur du substrat.

L'apparition de fissures régulières, et donc la détermination de la charge critique, est visualisée par observation de la rayure sous microscope optique, à un grossissement x500.

Le système de mesure utilisé permet une correspondance directe entre la position le long de la rayure et la charge appliquée.

Les résultats obtenus sont consignés dans le tableau ci-après et reportés sur la figure 3.

| Nanoparticules | Charge Critique (en N) |
|---|---|
| Exemple comparatif 1 Aluminasol®-200 | 4,6 |
| Exemple comparatif 2 Aluminasol®-200 greffé | 5,9 |
| Revêtement de l'exemple 2 Boehmite (F=30, f=10) | 9,6 |
| Revêtement de l'exemple 1 Boehmite (F=25, f=25) | 12.6 |

## Revendications

**1.** Utilisation pour la formation sur un substrat d'un revêtement anti-rayures d'une composition comprenant :

a) au moins un alkoxysilane et/ou au moins un hydrolysat de celui-ci,
b) des particules anisotropes d'au moins un oxyde métallique et/ou d'au moins un oxyhydroxyde métallique, ayant un axe principal et une longueur D1 suivant cet axe principal, inférieure ou égale à 400 nm et dont les dimensions varient, dans une direction transverse audit axe principal, entre une dimension minimum D2 et une dimension maximum D3, avec $D3 \geq D2$,
c) optionnellement un catalyseur de polymérisation,

**caractérisée en ce que** les ratios $F=D1/D2$ et $f=D1/D3$ définissant les facteurs de forme de ladite particule anisotrope vérifient la relation $F>10$ et $f \geq 10$, les dimensions et facteurs de forme étant déterminés par comptage sur des observations en microscopie électronique à transmission (MET), tel que décrit dans la description.

**2.** Utilisation selon la revendication 1, **caractérisée en ce que** $10<F \leq 50$ et $10<f \leq 50$.

**3.** Utilisation selon la revendication 2, **caractérisée en ce que** $F \geq 15$, mieux, $F \geq 20$, préférentiellement $F \geq 25$.

**4.** Utilisation selon la revendication 2, **caractérisée en ce que** $F \geq 30$, préférentiellement $F \geq 35$.

**5.** Utilisation selon l'une quelconque des revendications 2 à 4, **caractérisée en ce que** $f \geq 20$, préférentiellement $f \geq 25$.

**6.** Utilisation selon l'une quelconque des revendications précédentes, **caractérisée en ce que** D1 varie de 100 à 300 nm, mieux varie de 140 à 300 nm et de préférence varie de 140 à 200 nm.

**7.** Utilisation selon l'une quelconque des revendications précédentes, **caractérisée en ce que** F et f sont identiques.

**8.** Utilisation selon la revendication 7, **caractérisée en ce que** les particules anisotropes présentent la forme d'aiguilles.

**9.** Utilisation selon l'une quelconque des revendications 1 à 6, **caractérisée en ce que** les particules anisotropes présentent la forme de lattes.

**10.** Utilisation selon l'une quelconque des revendications précédentes, **caractérisée en ce que** ledit oxyde métallique est un oxyde d'aluminium.

**11.** Utilisation selon l'une quelconque des revendications 1 à 9, **caractérisée en ce que** ledit oxyhydroxyde métallique est un oxyhydroxyde d'aluminium AlOOH.

12. Utilisation selon l'une quelconque des revendications précédentes, **caractérisée en ce que** les particules anisotropes ont subi un traitement de surface afin d'accroître leur solubilité dans l'alkoxysilane et/ou l'hydrolysat de celui-ci.

13. Utilisation selon la revendication 12, **caractérisée en ce que** le traitement de surface des particules anisotropes comprend une étape de greffage d'au moins un alkoxysilane organofonctionnel.

14. Utilisation selon la revendication 13, **caractérisée en ce que** l'alkoxysilane organofonctionnel est un époxysilane et/ou un (méth)acryloxysilane.

15. Utilisation selon la revendication 14, **caractérisée en ce que** l'alkoxysilane organofonctionnel est le γ-glycidoxypropyltriméthoxysilane et/ou le (3-méthacryloxy propyl)triméthoxy silane.

16. Utilisation selon l'une quelconque des revendications précédentes, **caractérisée en ce que** les particules anisotropes sont sous forme d'une solution colloïdale.

17. Utilisation selon l'une quelconque des revendications précédentes, **caractérisée en ce que** les particules anisotropes sont obtenues par hydrolyse d'un précurseur métallique hydrolysable et traitement hydrothermal.

18. Utilisation selon la revendication 17, **caractérisée en ce que** le précurseur métallique hydrolysable est un acylate d'aluminium.

19. Utilisation selon la revendication 17 ou 18, **caractérisée en ce que** le traitement hydrothermal est effectué en milieu acide, en autoclave, à une température comprise entre 150°C et 200°C.

20. Utilisation selon l'une quelconque des revendications précédentes, **caractérisée en ce que** l'extrait sec théorique de ladite composition comprend de 0,1 à 39% en masse de particules anisotropes d'oxyde métallique et/ou d' oxyhydroxyde métallique.

21. Utilisation selon la revendication 20, **caractérisée en ce que** l'extrait sec de ladite composition comprend de 3 à 35% en masse, 10 préférentiellement de 10 à 35% en masse de particules anisotropes d'oxyde métallique et/ou d'oxyhydroxyde métallique.

22. Utilisation selon l'une quelconque des revendications précédentes, **caractérisée en ce que** l'alkoxysilane et/ou l'hydrolysat de celui-ci est un époxysilane.

23. Utilisation selon l'une quelconque des revendications précédentes dans laquelle la composition polymérisable comprend au moins un autre oxyde métallique globalement isotrope.

24. Substrat revêtu d'un film anti-rayures obtenu par dépôt et durcissement d'une composition telle que définie dans l'une quelconque des revendications précédentes, ledit film présentant, sous rayure par une pointe diamant de rayon de pointe 100 micromètres, une charge critique supérieure ou égale à 7 N, préférentiellement supérieure ou égale à 9 N la charge critique étant mesurée comme décrit dans la partie expérimentale.

25. Substrat, selon la revendication 24, **caractérisé en ce que** ledit film présente une épaisseur de 1 à 10 microns, préférentiellement de 2 à 5 microns.

26. Substrat selon la revendication 24 ou 25, **caractérisé en ce que** ledit film présente une charge critique supérieure ou égale à 11.

27. Substrat selon l'une quelconque des revendications 24 à 26, **caractérisé en ce que** ledit substrat est une lentille ophtalmique.

28. Substrat selon la revendication 27, **caractérisé en ce que** ledit substrat est un verre de lunettes.

29. Particules anisotropes d'oxyde d'aluminium et/ou d'oxyhydroxyde d'aluminium ayant un axe principal et une longueur D1 suivant cet axe principal, inférieure ou égale à 400 nm et dont les dimensions varient, dans une direction transverse audit axe principal, entre une dimension minimum D2 et une dimension maximum D3, avec D3≥D2, **caractérisées en ce que** les ratios F=D1/D2 et f=D1/D3 définissant les facteurs de forme desdites particules

anisotropes, vérifient la relation F>10 et f≥10, les dimensions et facteurs de forme étant déterminés par comptage sur des observations en microscopie électronique à transmission (MET), tel que décrit dans la description.

**30.** Particules anisotropes selon la revendication 29, **caractérisées en ce que** F≥25, préférentiellement F≥30.

**31.** Particules anisotropes selon la revendication 30, **caractérisées en ce que** ledit oxyhydroxyde est l'oxyhydroxyde d'aluminium AlOOH.

**32.** Particules anisotropes selon l'une quelconque des revendications 29 à 31, **caractérisées en ce qu'**elles comprennent une écorce greffée d'au moins un alkoxysilane organofonctionnel.

**33.** Particules anisotropes selon la revendication 32, **caractérisées en ce que** l'alkoxysilane greffé est le γ-glycidoxypropyltriméthoxysilane et/ou le (3-méthacryloxypropyl)triméthoxysilane.

**34.** Particules anisotropes selon la revendication 32 ou 33, **caractérisées en ce que** l'écorce représente 10 à 40%, de préférence 10 à 30% de la masse totale des particules.

**35.** Particules anisotropes selon l'une quelconque des revendications 29 à 34, **caractérisée en ce que** les particules anisotropes sont sous forme d'une solution colloïdale.

## Patentansprüche

**1.** Verwendung einer Verbindung zur Bildung einer Antikratzschicht auf einem Substrat, die Verbindung enthaltend:

a) wenigstens ein Alkoxisilan und/oder wenigstens ein Hydrolysat desselben,
b) anistrotropische Teilchen aus wenigstens einem Metalloxid und/oder aus wenigstens einem Metalloxihydroxid, aufweisend eine Hauptachse und eine Länge D1, welche kleiner oder gleich 400 nm ist, entlang dieser Hauptachse und Erstreckungen in einer zur Hauptachse transversalen Richtung, welche variieren zwischen einer minimalen Erstreckung D2 und einer maximalen Erstreckung D3 mit D3 ≥ D2,
c) wahlweise einen Polymerisationskatalysator,

**dadurch gekennzeichnet, dass** die Verhältnisse F=D1/D2 und f=D1/D3, welche die Formfaktoren des anisotropischen Teilchens definieren, die Relationen F>10 und f ≥10 erfüllen, und die Erstreckungen und Formfaktoren bestimmt sind durch Ermittlung anhand von transmissionselektronenmikroskopischen (TEM) Beobachtungen, wie in der Beschreibung beschrieben.

**2.** Verwendung gemäß Anspruch 1, **dadurch gekennzeichnet, dass** 10<F≤50 und 10<f≤50.

**3.** Verwendung gemäß Anspruch 2, **dadurch gekennzeichnet, dass** F≥15, besser F≥20, vorzugsweise F≥25.

**4.** Verwendung gemäß Anspruch 2, **dadurch gekennzeichnet, dass** F≥30, vorzugsweise F≥35.

**5.** Verwendung gemäß einem beliebigen der Ansprüche 2 bis 4, **dadurch gekennzeichnet, dass** f≥20, vorzugsweise f≥25.

**6.** Verwendung gemäß einem beliebigen der vorangehenden Ansprüche, **dadurch gekennzeichnet, dass** D1 zwischen 100 und 300 nm variiert, besser zwischen 140 und 300 nm variiert und vorzugsweise zwischen 140 und 200 nm variiert.

**7.** Verwendung gemäß einem beliebigen der vorangehenden Ansprüche, **dadurch gekennzeichnet, dass** F und f identisch sind.

**8.** Verwendung gemäß Anspruch 7, **dadurch gekennzeichnet, dass** die anisotropischen Teilchen eine Nadelform aufweisen.

**9.** Verwendung gemäß einem beliebigen der Ansprüche 1 bis 6, **dadurch gekennzeichnet, dass** die anisotropischen Teilchen eine Stäbchenform aufweisen.

**10.** Verwendung gemäß einem beliebigen der vorangehenden Ansprüche, **dadurch gekennzeichnet, dass** das Metalloxid ein Aluminiumoxid ist.

**11.** Verwendung gemäß einem beliebigen der Ansprüche 1 bis 9, **dadurch gekennzeichnet, dass** das Metalloxihydroxid ein Aluminiumoxihydroxid AlOOH ist.

**12.** Verwendung gemäß einem beliebigen der vorangehenden Ansprüche, **dadurch gekennzeichnet, dass** die anisotropischen Teilchen einer Oberflächenbehandlung unterzogen worden sind, um ihre Löslichkeit im Alkoxisilan und/oder dem Hydrolysat desselben zu vergrößern.

**13.** Verwendung gemäß Anspruch 12, **dadurch gekennzeichnet, dass** die Oberflächenbehandlung der anisotropischen Teilchen wenigsten einen Schritt des Aufpfropfens wenigstens eines organofunktionellen Alkoxisilans umfasst.

**14.** Verwendung gemäß Anspruch 13, **dadurch gekennzeichnet, dass** das organofunktionellen Alkoxisilan ein Epoxisilan und/oder ein (Meth)Acryloxisilan ist.

**15.** Verwendung gemäß Anspruch 14, **dadurch gekennzeichnet, dass** das organofunktionellen Alkoxisilan das γ-Glyzidoxipropyltrimethoxisilan und/oder das (3-Methacryloxipropyl)Trimethoxisilan ist.

**16.** Verwendung gemäß einem beliebigen der vorangehenden Ansprüche, **dadurch gekennzeichnet, dass** die anisotropischen Teilchen in Form einer kolloidalen Lösung vorliegen.

**17.** Verwendung gemäß einem beliebigen der vorangehenden Ansprüche, **dadurch gekennzeichnet, dass** die anisotropischen Teilchen durch Hydrolyse eines hydrolysierbaren metallischen Vorläufers und hydrothermische Behandlung gewonnen werden.

**18.** Verwendung gemäß Anspruch 17, **dadurch gekennzeichnet, dass** der hydrolysierbare metallische Vorläufer ein Aluminiumacylat ist.

**19.** Verwendung gemäß Anspruch 17 oder 18, **dadurch gekennzeichnet, dass** die hydrothermische Behandlung in einem saurem Milieu in einem Autoklaven bei einer Temperatur zwischen 150°C und 200°C ausgeführt wird.

**20.** Verwendung gemäß einem beliebigen der vorangehenden Ansprüche, **dadurch gekennzeichnet, dass** das theoretische Trockenextrakt der Verbindung zwischen 0,1 und 0,39 Massen% an anisotropischen Teilchen aus Metalloxid und/oder Metalloxihydroxid enthält.

**21.** Verwendung gemäß Anspruch 20, **dadurch gekennzeichnet, dass** das Trockenextrakt der Verbindung zwischen 3 und 35 Massen%, vorzugsweise zwischen 10 und 35 Massen% aus anisotropischen Teilchen von Metalloxid und/oder von Metalloxihydroxid enthält.

**22.** Verwendung gemäß einem beliebigen der vorangehenden Ansprüche, **dadurch gekennzeichnet, dass** das Alkoxisilan und/oder das Hydrolysat desselben ein Epoxisilan ist.

**23.** Verwendung gemäß einem beliebigen der vorangehenden Ansprüche, wobei die polymerisierbare Verbindung wenigstens ein anderes global isotropisches Metalloxid umfasst.

**24.** Substrat, beschichtet mit einem Antikratzfilm, gewonnen durch Ablagerung und Härtung einer Verbindung, wie durch einen beliebigen der vorangehenden Ansprüche definiert, wobei der Film bei Bekratzen mittels Diamantspitze mit einem Radius der Spitze von 100 Mikrometern eine kritische Belastung höher als oder gleich 7 N, vorzugsweise höher als oder gleich 9 N, aufweist, wobei die kritische Belastung gemessen wird, wie im experimentellen Teil beschrieben.

**25.** Substrat gemäß Anspruch 24, **dadurch gekennzeichnet, dass** der Film eine Dicke von 1 bis 10 Mikron, vorzugsweise von 2 bis 5 Mikron aufweist.

**26.** Substrat gemäß Anspruch 24 oder 25, **dadurch gekennzeichnet, dass** der Film eine kritische Belastung höher als oder gleich 11 aufweist.

**27.** Substrat gemäß einem beliebigen der Ansprüche 24 bis 26, **dadurch gekennzeichnet, dass** das Substrat eine optische Linse ist.

**28.** Substrat gemäß Anspruch 27, **dadurch gekennzeichnet, dass** das Substrat ein Brillenglas ist.

**29.** Anisotropische Teilchen aus Aluminiumoxid und/oder Aluminiumoxihydroxid mit einer Hauptachse und einer Länge D1, welche kleiner oder gleich 400 nm ist, entlang dieser Hauptachse und Erstreckungen, welche in einer zur Hauptachse transversalen Richtung zwischen einer minimalen Erstreckung D2 und einer maximalen Erstreckung D3 variieren mit D3≥D2, **dadurch gekennzeichnet, dass** die Verhältnisse F=D1/D2 und f=D1/D3, welche die Formfaktoren der anisotropischen Teilchen definieren, die Beziehung F>10 und f≥10 erfüllen, und die Erstreckungen und Formfaktoren bestimmt sind durch Ermittlung anhand von transmissionselektronenmikroskopischen (TEM) Beobachtungen, wie in der Beschreibung beschrieben.

**30.** Anisotropische Teilchen gemäß Anspruch 29, **dadurch gekennzeichnet, dass** F≥25, vorzugsweise F≥30.

**31.** Anisotropische Teilchen gemäß Anspruch 30, **dadurch gekennzeichnet, dass** das Oxihydroxid Aluminiumoxihydroxid AlOOH ist.

**32.** Anisotropische Teilchen gemäß einem beliebigen der Ansprüche 29 bis 31, **dadurch gekennzeichnet, dass** sie eine aufgepfropfte Schicht aus wenigstens einem organofunktionellen Alkoxisilan umfassen.

**33.** Anisotropische Teilchen gemäß Anspruch 32, **dadurch gekennzeichnet, dass** das aufgepfropfte Alkoxisilan γ-Glyzidoxipropyltrimethoxisilan und/oder (3-Methacryloxipropyl)Trimethoxisilan ist.

**34.** Anisotropische Teilchen gemäß Anspruch 32 oder 33, **dadurch gekennzeichnet, dass** die Schale 10 bis 40 Massen%, vorzugsweise 10 bis 30 Massen% der Gesamtmasse der Teilchen aufweist.

**35.** Anisotropische Teilchen gemäß einem beliebigen der Ansprüche 29 bis 34, **dadurch gekennzeichnet, dass** die anisotropischen Teilchen in Form einer kolloidalen Lösung vorliegen.

## Claims

**1.** Use for forming on a substrate an anti-scratch coating of a polymerisable composition comprising:

a) at least one alkoxysilane and/or at least one hydrolysate thereof,
b) anisotropic particles of at least one metal oxide and/or of at least one metal oxyhydroxide, having a main axis and a length D1 following this main axis lower than or equal to 400 nm and whereof the sizes vary, in a direction transversal to said main axis, between a minimum dimension D2 and a maximum dimension D3, with D3≥ D2,
c) optionally a polymerisation catalyst,

**characterized in that** the ratios F=D1/D2 and f=D1/D3 defining the form factors of said anisotropic particle verify the relations F>10 et f≥10, the dimensions and form factors being determinated by counting on observations through electronic microscopy by transmission (MET) as disclosed in the description.

**2.** The use according to claim 1, **characterized in that** 10<F≤50 and 10<f≤50.

**3.** The use according to claim 2, **characterized in that** F≥15, better F≥20, preferably F≥25.

**4.** The use according to claim 2, **characterized in that** F≥30, preferably F≥35.

**5.** The use according to anyone of claims 2 to 4, **characterized in that** f≥20, preferably f≥25.

**6.** The use according to any of claims 1 to 5, **characterized in that** D1 varies from 100 to 300 nm, better 140 to 300 nm and preferably varies from 140 to 200 nm.

**7.** The use according to any of the preceding claims, **characterized in that** F and f are identical.

8. The use according to claim 7, **characterized in that** the anisotropic particles are in the form of needles.

9. The use according to anyone of claims 1 to 6, **characterized in that** the anisotropic particles are in the form of laths.

10. The use according to anyone of the preceding claims, **characterized in that** said metallic oxide is an aluminium oxide.

11. The use according to any of claims 1 to 9, **characterized in that** said metal oxyhydroxide is an aluminium oxyhydroxide AIOOH.

12. The use according to any of the preceding claims, **characterized in that** the anisotropic particles have been surface-treated in order to increase their solubility in alkoxysilane and/or hydrolysate thereof.

13. The use according to claim 12, **characterized in that** the surface treatment of the anisotropic particles comprises a grafting step of at least one organo-functional alkoxysilane.

14. The use according to claim 13, **characterized in that** the organo-functional alkoxysilane is an epoxysilane and/or a (meth)acryloxysilane.

15. The use according to claim 14, **characterized in that** the organo-functional alkoxysilane is $\gamma$-glycidoxypropyltrimethoxysilane and/or (3-methacryloxy propyl)trimethoxy silane.

16. The use according to any of the preceding claims, **characterized in that** the anisotropic particles are in the form of a colloidal solution.

17. The use according to anyone of the preceding claims, **characterized in that** the anisotropic particles are obtained by hydrolysis of a hydrolysable metallic precursor and a hydrothermal treatment.

18. The use according to claim 17, **characterized in that** the hydrolysable metallic precursor is an aluminium acetate.

19. The use according to claim 17 or 18, **characterized in that** the hydrothermal treatment is performed in an acidic medium, in autoclave, at a temperature ranging from 150°C to 200°C.

20. The use according to any of the preceding claims, **characterized in that** the theoretic dry extract of said composition comprises from 0.1 to 39 % in mass of anisotropic particles of metal oxide and/or of metal oxyhydroxide.

21. The use according to claim 20, **characterized in that** the dry extract of said composition comprises from 3 to 35%, preferably 10 to 35% in mass of anisotropic particles of metal oxide and/or of metal oxyhydroxide.

22. The use according to any of the preceding claims, **characterized in that** the alkoxysilane and/or the hydrolysate thereof is an epoxysilane.

23. The use according to any of the preceding claims, wherein the polymerizable composition comprises at least one other metallic oxide which is globally isotropic.

24. A substrate coated with an anti-scratch film obtained by deposition and hardening of a composition as defined in anyone of the preceding claims, said film exhibiting, when scratched by a diamond tip with a tip radius of 100 micrometres, a critical load greater than or equal to 7 N, preferably greater than 9N, said critical load being measured as described in the experimental part.

25. A substrate according to claim 24, **characterized in that** said film has a thickness of 1 to 10 microns, preferably of 2 to 5 microns.

26. A substrate coated with a film according to claim 24 or 25, **characterized in that** said film shows a critical load greater than or equal to 11 N.

27. A substrate according to any of the claims 24 to 26, **characterized in that** said substrate is an ophthalmic lens.

28. A substrate according to claim 27, **characterized in that** said ophthalmic lens is a spectacle glass.

**29.** Anisotropic particles of metal oxide and/or of metal oxyhydroxide having a main axis and a length D1 following this main axis lower than or equal to 400 nm and whereof the sizes vary, in a direction transversal to said main axis, between a minimum dimension D2 and a maximum dimension D3, with D3≥ D2, **characterized in that** the ratios F=D1/D2 and f=D1/D3 defining the form factors of said anisotropic particles, verify the relations F>10 and f≥10, the dimensions and form factors being determined by counting on observations through electronic microscopy by transmission (MET) as described in the description.

**30.** Anisotropic particles according to claim 29, **characterized in that** F≥25, preferably F≥30.

**31.** Anisotropic particles according to claim 30, **characterized in that** said oxyhydroxide is aluminium oxyhydroxide AlOOH.

**32.** Anisotropic particles according to any of claims 29 to 31, **characterized in that** they comprise a shell grafted with at least one organo-functional alkoxysilane.

**33.** Anisotropic particles according to claim 32, **characterized in that** the grafted alkoxysilane is γ-glycidoxypropyltrimethoxysilane and/or (3-methacryloxypropyl)trimethoxysilane.

**34.** Anisotropic particles according to claim 32 or 33, **characterized in that** the shell represents 10 to 40%, preferably 10 to 30% of the total mass of the particles.

**35.** Anisotropic particles according to any of the claims 29 to 34, **characterized in that** the anisotropic particles are in the form of a colloidal solution.

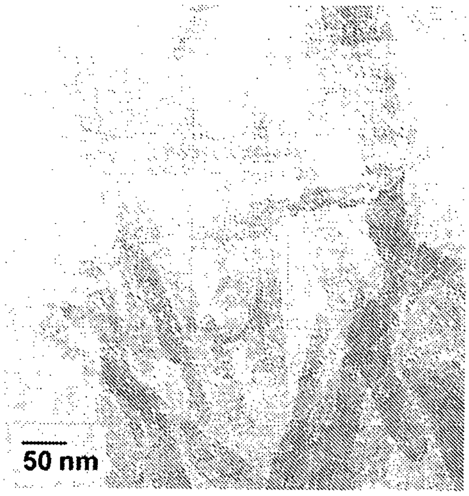


FIGURE 1

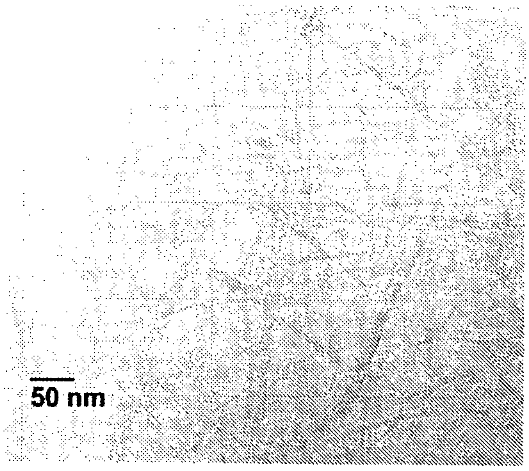


FIGURE 2

Charge critique (en N)

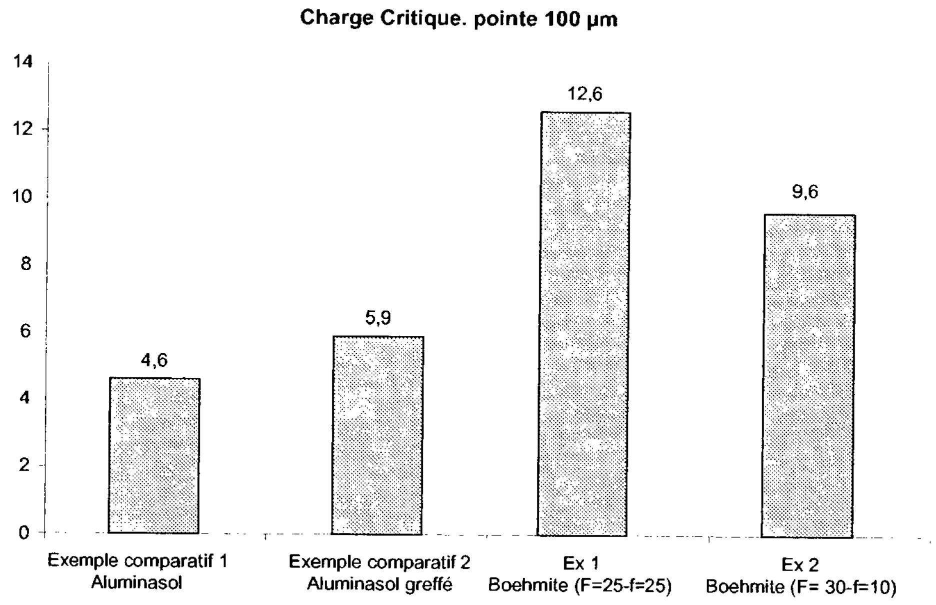


FIGURE 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 5403513 A
- US 5407600 A
- JP 64941 A
- JP 63225635 A
- JP 59078925 A
- JP 7133463 B
- EP 1245968 A
- EP 614957 A
- US 4211823 A
- FR 2734827 A
- JP 63141001 A
- JP 63087223 A
- US 5015523 A
- EP 0404111 A
- US 5316791 A
- EP 0680492 A